Europäisches Patentamt

European Patent Office

Office européen des brevets

(11) Publication number : **0 486 288 A1**

# EUROPEAN PATENT APPLICATION

(21) Application number : **91310487.3**

(22) Date of filing : **13.11.91**

(51) Int. Cl.⁵ : **B62K 19/36, B62J 1/08**

(30) Priority : **13.11.90 GB 9024685**

(43) Date of publication of application :
**20.05.92 Bulletin 92/21**

(84) Designated Contracting States :
**DE FR IT**

(71) Applicant : **RALEIGH INDUSTRIES LIMITED**
**Triumph Road**
**Nottingham, NG7 2DD (GB)**

(72) Inventor : **O'Donovan, Gerald Victor**
**316 Carlton Road**
**Worksop, SB1 7LP (GB)**

(74) Representative : **Funge, Harry et al**
**WILSON, GUNN & ELLIS 41-51 Royal**
**Exchange Cross Street**
**Manchester M2 7BD (GB)**

(54) **Cycle seat pillar mounting.**

(57)   A mounting arrangement is proposed for the seat pillar (12) of a bicycle which includes at least one member (21) having a cam surface (23) thereon, the member (21) being supported adjacent the seat pillar (12) and having access thereto through an aperture in the seat tube (10) within which the seat pillar (12) is telescopingly engaged, there being a cam suface (23) on the member and means (17) being provided to draw the cam surface (23) into pressure engagement with the seat pillar (12).

FIG. 2

EP 0 486 288 A1

This invention relates to the mounting of a cycle seat pillar on a cycle frame.

A seat pillar of a cycle is usually arranged to be telescopically received within an upwardly extending seat tube of the frame and the upper end of the seat tube, together with any other members (such as frame lugs) which form a joint assembly on the frame at the top of the seat tube is slotted in order that it can be urged into clamping engagement with the seat pillar. Closing of the slot in the seat tube, or the seat tube together with its lug, can be achieved by arranging a clamping member to surround the seat tube, or can be effected by providing outwardly extending members on the tube which, when urged together by a bolt or the like, cause the seat tube to move into clamping engagement with the pillar.

This known method of pillar clamping has disadvantages in that the cutting of the slot in the seat tube and/or the lug results in a weakening of the joint and results in scoring of the seat pillar in use and the inevitable closing of the slot after prolonged use, resulting in possible seizure, difficult adjustment and severe marking of the seat pillar.

It is an object of the present invention to provide an improved seat pillar mounting on a cycle frame.

The invention provides a seat pillar mounting on a cycle frame including a seat tube and a seat pillar telescopically received within the seat tube, the mounting comprising a cut-out in the seat tube, and a member mounted for movement transversely of the axis of the seat tube, said member having a cam surface facing the seat pillar, said cam surface being capable of transverse movement to be urged into securing relationship with the seat pillar.

The said member may be provided in a frame joint assembly at the top of the seat tube; alternatively, structure can be provided on said seat tube mounting said member separately of said frame joint.

The said cam member may be a cotter pin; alternatively said cam-forming member may be complemented by a second cam-forming member, the two cam-forming members being interconnected and being arranged to act, through their respective cam surfaces, in opposite clamping manner upon the seat pillar. The clamping is preferably effected by means of a screw.

If desired. the said member can be restrained against rotation by being keyed to engage its housing.

A housing for the member can extend completely transversely of its mounting structure, or with appropriate design, the member can be housed within a blind structure opening on one side of the frame.

Ordinarily a screwed member, such as a thumb screw and nut will be used to draw the cam surface of the member into engagement with the seat pillar. However, quick release cam acting members comparable to those used to secure bicycle wheels to the frame can also be used.

Although it is expected that the member will be mounted as part of the frame joint, at that position whereat conventional clamping devices are mounted, it could be disposed elsewhere, for example in specific structure disposed below the upper seat tube frame joint, if it was felt that to mount the member in that frame joint might weaken the joint.

The invention will be described further, by way of example, with reference to the accompanying drawings, wherein:-

Fig. 1 is a side elevation of a first preferred seat pillar mounting of the invention;

Fig. 2 is a cross-sectional line II-II of Fig. 2;

Fig. 3 illustrates a cam member of the mounting;

Fig. 4 is a side elevation of a second embodiment of mounting;

Fig. 5 is a cross-sectional on line V-V of Fig. 4;

Fig. 6 illustrates a cam member of the mounting of Fig. 4 and 5;

Fig. 7 illustrates the transverse member and fastening of the mounting of Fig. 4 and 5;

Fig. 8 is a side elevation of a third possible embodiment;

Fig. 9 is a cross-sectional view on line IX-IX of Fig. 8;

Fig. 10 illustrates the cam member of the embodiment shown in Figs. 8 and 9 in diagrammatic perspective view;

Fig. 11 is a side elevation of a fourth possible embodiment of mounting of the invention;

Fig. 12 is a cross-sectional view on line XII-XII of Fig. 11;

Fig. 13 shows the cam member of the mounting of Figs. 11 and 12; and

Fig. 14 illustrates a further mounting of the invention.

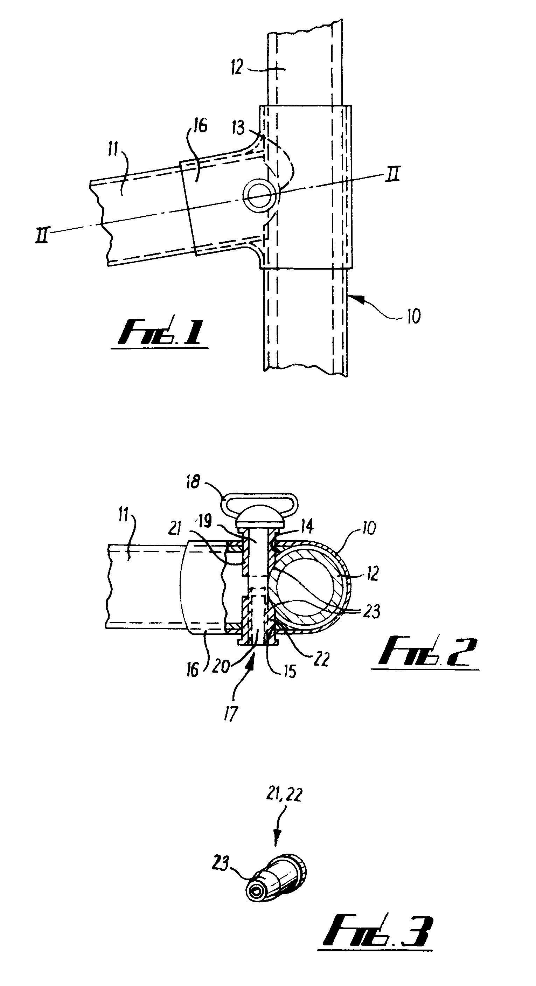

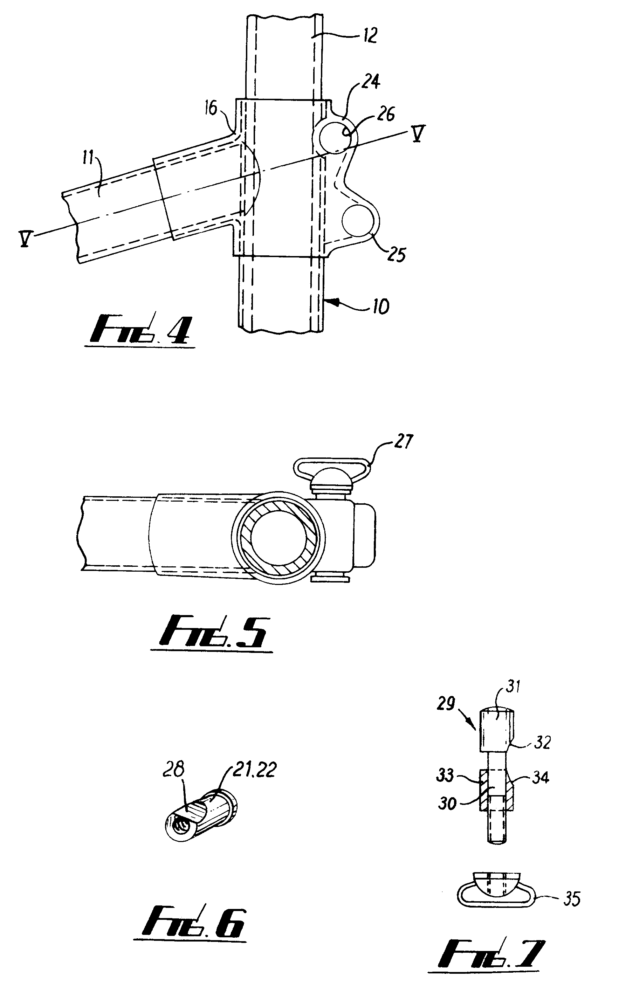

Referring firstly to Figs. 1, 2 and 3, it will be seen that the mounting of the invention is incorporated in a frame joint between a seat tube 10 and a top tube 11. Seat pillar 12 is telescopically received within the seat tube 10. Within the joint the seat tube has a cut-out 13 and in register with the cut-out 13 respective apertures 14 and 15 are formed in the top tube and uniting lug 16.

The material of the tube 11 and lugs 16 surrounding apertures 14 and 15 constitutes a support structure for a transverse member 17. The transverse member 17 has three parts, a thumb screw 18 having a plane proximal shank portion 19 and a threaded distal shank portion 20. The shank mounts two sleeves 21 and 22 each of which has a cam surface 23. Sleeve 21 has a smooth bore and sleeve 22 is threadedly engaged with distal shank portion 20. Each of sleeves 21 and 22 has an outer annular flange to prevent it passing through respective apertures 14, 15.

In use, rotation of the thum screw 18 draws the two sleeves 21, 22 together, the cam surfaces 23 engaging the seat pillar 12 and clamping it against sliding and rotational movement relative to the seat tube 10.

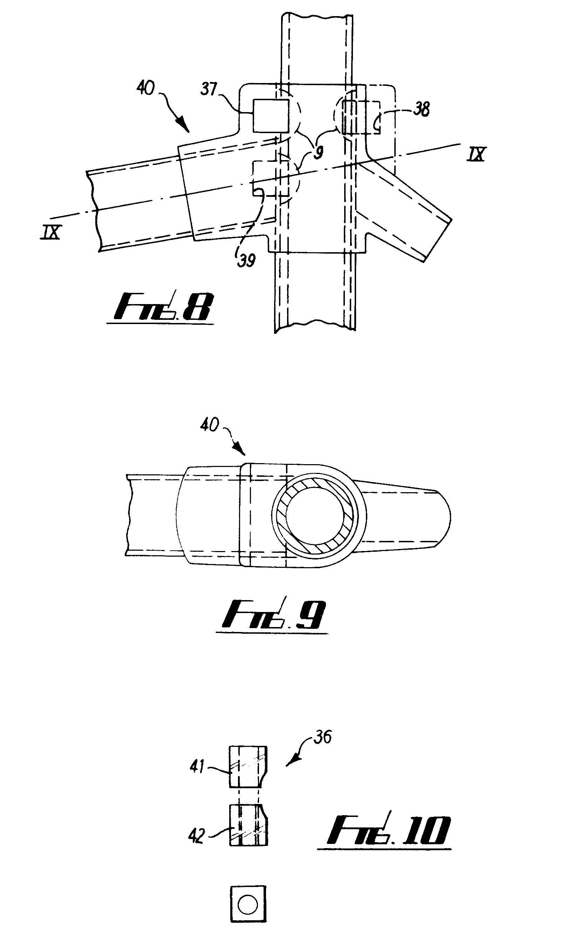

The cam surface 23 can be provided all round the sleeve 21, 22 as shown in Fig. 3, or can be provided only on one side. By not providing the cam surface all the way round the sleeves 21, 22, rotation thereof relative to the seat pillar can be discouraged.

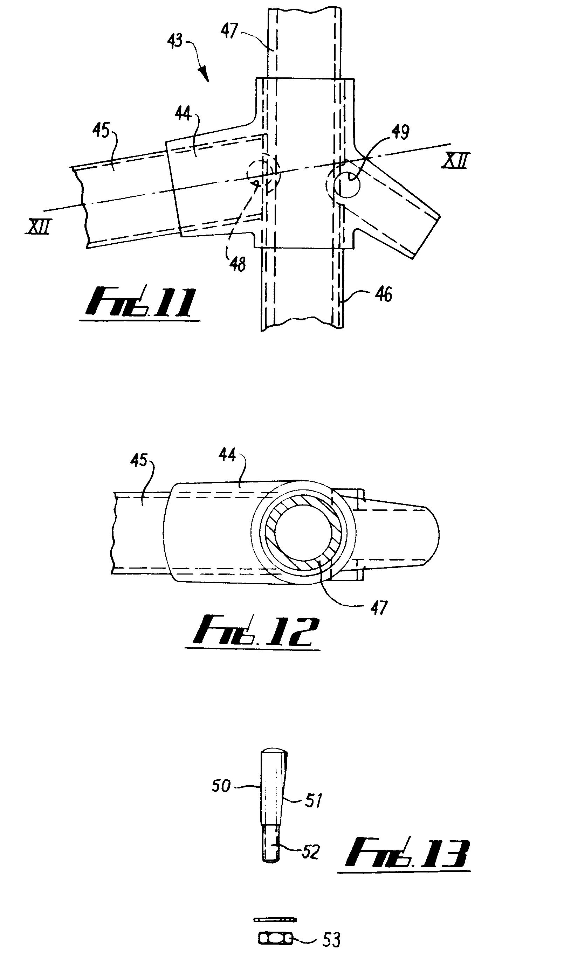

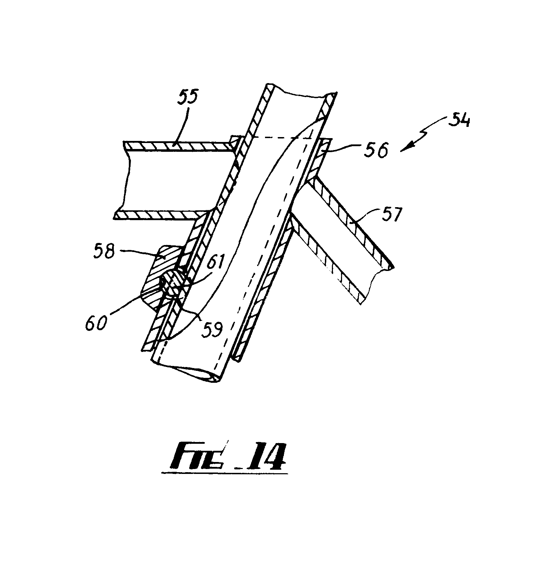

In the embodiment shown in Figs. 4 to 6 (wherein numerals similar to those used in Figs. 1 to 3 are used to denote similar parts) it will be seen that instead of the structure surrounding apertures 14 and 15 supporting the transverse member, structure 24 is provided above a conventional attachment part 25 for backstays. The structure 24 defines a passageway 26 which accommodates a transverse member in the form of a thumb screw 27 whose other component parts are exactly the same as those of the thumb screw 18. Fig. 6 illustrates how a sleeve 21 or 22 can have its cam surface 28 on one side only rather than an enclosing cam surface such as a cam surface 23 of Fig.3.

Fig. 7 shows a variation in a transverse member. In Fig. 7 the transverse member 29 has a shank 30 and a head 31. The head 31 has a first cam surface 32 and a sleeve 33 slidable on the shank 30 has a second cam surface 34. A thumb nut 35 is engaged with the shank 30. Tightening of the thumb nut 35 drives the sleeve 33 towards the head 31, causing cam surfaces 32 and 34 to grip the seat pillar (not shown) in a manner comparable to the sleeves 21 and 22.

Figs. 8 to 10 illustrate variations wherein a transverse member, for example the member 36 shown in Fig. 10 can be restained against rotational movement by being disposed in a non-circular transverse passageway, such as those square passageways indicated by reference numerals 37 to 39. The position of the passageway can be chosen on the frame joint 40 at any convenient position to suit the structure and to minimise loss of strength due to creation of the passageway. In Fig. 10 only externally square section sleeves 41 and 42 are shown, sleeve 41 having a plane bore and sleeve 42 being threaded. The sleeves can be united by a screw such as a thumb screw identical to thumbscrew 18.

Figs. 11, 12 and 13 illustrate further possibilities. In Figs. 11 and 12 there is shown a frame joint 43 having a lug 44 uniting a top tube 45 and a seat tube 46. The seat pillar 47 is again telescopically received within the seat tube 46. On one or other side of the joint a transverse passageway 48 or 49 is provided and accommodates a transverse member in the form of a cotter pin 50 which has a cam surface 51, and a threaded shank 52 with which can be engaged with a nut 53. Passageway 48 or 49 is in register with a cutout in the seat tube 46 as has been described earlier and it will be appreciated that due to the use of the particularly shaped cotter pin 50, the passageway 48 or 49 can be a blind passageway, and need not extend completely from one side of the frame to the other. This can make a neater appearing mounting.

Fig. 14 illustrates a further possibility wherein there is a frame joint 54 between a top tube 55 of a seat tube 56 and a back stay tube 57. The joint 54 could be a welded joint, provided with a surrounding lug. This could be a welded construction, wherein to provide a transverse passage for a seat of the transverse member could perhaps cause weakening of the joint. For this reason supplementary structure 58 (only illustrated schematically) can be provided at a position spaced from the joint 54 but again in register with the cut-out 59 in the seat tube 56. The structure 58 defines a transverse passageway 60 which accommodates a transverse member 61.

This embodiment operates in the same way as the other embodiment, except that the clamping position is spaced from the joint.

The invention is not limited to the precise details of the foregoing embodiments and variations can be made thereto within the scope of the following claims.

In particular, the materials of the transverse member, and/or of their sleeves can be varied to suit various conditions and the cam surfaces can be provided with a gripping, or non-damaging coating if this is felt necessary.

Many other variations are possible within the scope of the invention.

## Claims

1. A seat pillar mounting on a cycle frame including a seat tube and a seat pillar telescopically received within the seat tube, the seat pillar mounting comprising a cut-out in the seat tube, and a member mounted for movement transversely of the axis of the seat tube, said member having a cam surface facing the seat pillar, said cam surface being capable of transverse movement to be urged into securing relationship with the seat pillar.

2. A seat pillar mounting as claimed in claim 1, wherein said member is provided in a frame joint assembly at the top of the seat tube.

3. A seat pillar mounting as claimed in claim 1, including structure on said seat tube mounting said member at a position separate from any frame joint.

4. A seat pillar mounting as claimed in any one of claims 1 to 3, wherein the cam-forming member is complemented by a second cam-forming member, the two cam-forming members being interconnected and being arranged to act, through their respective cam surfaces, in opposite clamping manner upon the seat pillar. The clamping is preferably effected by means of a screw.

5. A seat pillar mounting as claimed in any one of the preceding claims including screw means adapted to effect said transverse movement of the or each cam surface.

6. A seat pillar mounting as claimed in any one of the preceding claims wherein the or each member is keyed to supporting structure therefor to preclude rotation thereof.

7. A seat pillar mounting as claimed in claim 4, wherein the two cam-forming members comprise sleeves, said sleeves being mounted on screw means on which one said member is clearance and with which the other sleeve is screw-threadedly engaged.

8. A seat pillar mounting as claimed in any one of the preceding claims, including a housing to receive the or each member, the or each member being supported relative to the housing and screw means adapted, upon actuation to move the or each member into clamping relationship with the seat pillar.

9. A seat pillar mounting as claimed in claim 8, wherein the or each member has a part disposed outwardly of the housing which is an interference fit with a respective aperture to limit movement thereof inwardly of the housing.

10. A seat pillar mounting as claimed in any one of claims 1 to 7 wherein the or each member is housed in a blind structure opening to one side of the frame, the cam surface of one said member being at that side of the seat pillar remote from the opening to said blind structure.

11. A seat pillar mounting as claimed in claim 1, wherein the member comprises a cotter pin.

12. A seat pillar mounting as claimed in claim 11, wherein the cotter pin is housed in a blind structure opening to one side of the frame.

**FIG.1**

**FIG.2**

**FIG.3**

EP 0 486 288 A1

Fig. 4

Fig. 5

Fig. 6

Fig. 7

40  37

38

IX

IX

9

39

**FIG. 8**

40

**FIG. 9**

36

41

42

**FIG. 10**

43

47

44

45

49

XII

XII

48

46

**FIG.11**

45

44

47

**FIG.12**

50

51

52

**FIG.13**

53

_FIG _14_

EP 0 486 288 A1

**European Patent Office**

## EUROPEAN SEARCH REPORT

Application Number

EP 91 31 0487

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | EP-A-0 424 353 (AUSTRIA METALL AG) <br> * the whole document * <br> --- | 1,2,4-8 | B62K19/36 <br> B62J1/08 |
| X | US-A-4 120 512 (L.NEWLANDS) <br><br> * the whole document * | 1,2,4,5, 7,8 | |
| A | --- | 6,10 | |
| X | FR-A-1 110 413 (F.DE CHABOT) <br><br> * the whole document * <br> --- | 1,3-5,7, 8 | |
| X | DE-U-8 909 714 (H.KETTLER GMBH) <br><br> * the whole document * <br> --- | 1,3,4,7, 8 | |
| A | US-A-4 789 172 (C.MUELLER) <br><br> * the whole document * | 1,2,4,5, 7,8 | |
| | ----- | | TECHNICAL FIELDS SEARCHED (Int. Cl.5 ) <br><br> B62K <br> B62J |

The present search report has been drawn up for all claims

| Place of search | Date of completion of the search | Examiner |
|---|---|---|
| THE HAGUE | 13 FEBRUARY 1992 | CZAJKOWSKI A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

10